Europäisches Patentamt

(19) European Patent Office

Office européen des brevets

(11) Numéro de publication: **0 233 807**
**B1**

(12) **FASCICULE DE BREVET EUROPEEN**

(45) Date de publication du fascicule du brevet:
**20.09.89**

(21) Numéro de dépôt: **87400124.1**

(22) Date de dépôt: **20.01.87**

(51) Int. Cl.⁴: **F16F 1/12**

(54) Dispositif d'accrochage d'un ressort sur une tige.

(30) Priorité: **22.01.86 FR 8600882**

(43) Date de publication de la demande:
**26.08.87 Bulletin 87/35**

(45) Mention de la délivrance du brevet:
**20.09.89 Bulletin 89/38**

(84) Etats contractants désignés:
**DE ES GB IT**

(56) Documents cités:
**FR-A- 1 326 117**
**FR-A- 2 563 588**

(73) Titulaire: **BENDIX France Société Anonyme dite:,
126, rue de Stalingrad, F-93700 Drancy(FR)**

(72) Inventeur: **Douillet, Christian, 5, rue Lavoisier,
F-92800 Puteaux(FR)**

(74) Mandataire: **Lejet, Christian et al, Division Technique
Service Brevets BENDIX Europe 126, rue de Stalingrad,
F-93700 Drancy(FR)**

## Description

La présente invention se rapporte à un dispositif d'accrochage d'un ressort sur une tige.

Dans certains domaines notamment dans les maîtres-cylindres de freinage il est souhaitable d'accrocher une extrémité d'un ressort sur un élément, par exemple une tige métallique, afin de constituer un ensemble pré-assemblé de ces deux composants, facilitant ainsi leur montage dans un ensemble plus complexe.

L'invention concerne un dispositif d'accrochage pour le montage concentrique d'un ressort hélicoïdal sur une tige comportant une surface de butée transversale et une gorge, circonférent: elle au voisinage de la surface de butée transversale le dispositif d'accrochage comportant un élément d'accrochage en materiau élastique et étant susceptible d'être monté sur la tige et comprenant une partie destinée à être reçue dans la gorge et une surface inclinée formant un sommet qui, quand le dispositif d'accrochage est monté sur la tige, définit un point à une distance maximale d'un axe longitudinal de la tige et se trouve à une distance prédéterminée de la surface de butée, le ressort ayant un rayon interne inférieure à ladite distance maximale et étant constitué à partir d'un fil sensiblement cylindrique dont le rayon est inférieure à ladite distance prédéterminée.

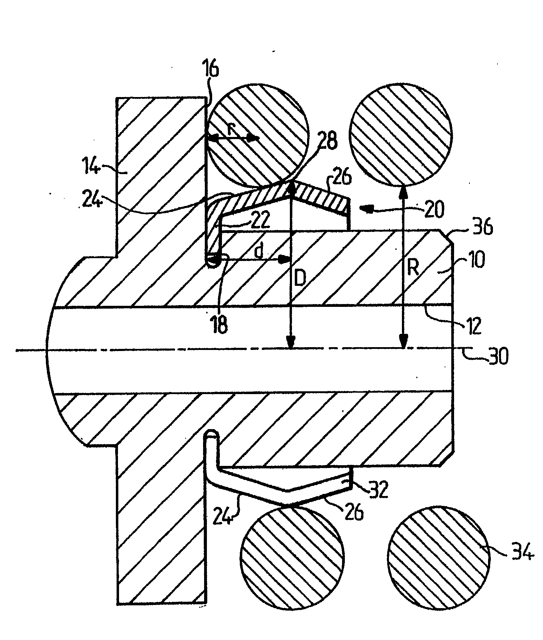

D'autres caractéristiques de la présente invention ressortiront de la description suivante d'un mode de réalisation donné à titre illustratif, mais nullement limitatif, faite en relation avec les dessins annexés, dans lesquels la figure unique est une vue en coupe longitudinale d'un dispositif d'accrochage d'un ressort sur une tige.

Comme représenté sur la figure une tige, par exemple cylindrique 10, qui, dans l'exemple illustré, comporte un alésage londitudinal 12, comprend une partie s'étendant transversalement 14 formant une surface de butée 16. La tige 10 comporte, de plus, une gorge s'étendant vers l'intérieur 18 au voisinage immédiat de la surface 16. Un dispositif d'accrochage 20, par exemple sensiblement en forme de coupelle, comprend une partie radiale 22 dimensionnée de façon à pouvoir être reçue dans la gorge 18. Le dispositif d'accrochage 20 comprend, de plus, une première et une seconde surfaces annulaires inclinées 24, 26 dont le dièdre 28 définit un sommet à une distance D maximale à partir de l'axe 30 de l'alésage 12.

Le dispositif d'accrochage 20 est en métal élastique, par exemple le dispositif, est pourvu d'une fente longitudinale 32, ce qui lui permet une expansion et/ou une contraction radiale. Un ressort hélicoïdal 34, destiné à être monté sur la tige 10 par l'intermédiaire du dispositif d'accrochage 20, a un rayon interne R et est formé d'un fil cylindrique dont le rayon est r. La distance d entre le dièdre 28 et la surface de butée 16 est supérieure au rayon r du fil du ressort 34.

Le montage du dispositif ainsi décrit s'effectue comme suit. Le dispositif d'accrochage 20 est monté sur la tige à partir de l'extrémité droite (en regardant les dessins) qui comporte une surface biseautée 36

servant à promouvoir l'expansion radiale du dispositif 20. La partie radiale 22 du dispositif d'accrochage 20 est ensuite ramenée en butée contre la surface 16 de la partie 14, la partie radiale 22 entrant alors élastiquement dans la gorge 18. Le ressort hélicoïdal 34 est ensuite monté à force sur le dispositif d'accrochage 20, la fente 32 permettant à ce dernier de se contracter radialement, la distance D étant supérieure au rayon interne R du ressort 34. Une fois que la spire d'extrémité du ressort 34 a dépassé le sommet du dièdre 28 le dispositif d'accrochage 20 recouvre la position représentée sur la figure. La première surface inclinée 24 sert ainsi à retenir le ressort 34 sur la tige 10.

## Revendications

1/ Dispositif d'accrochage pour le montage concentrique d'un ressort hélicoïdal (34) sur une tige (10) comportant une surface de butée transversale (16) et une gorge circonférentielle (18) au voisinage de la surface de butée transversale (16), le dispositif d'accrochage comportant un élément d'accrochage (20) en matériau élastique et susceptible d'être monté sur la tige et comprenant une partie (22) destinée à être reçue dans la gorge (18) et une surface inclinée (24) formant un sommet (28) qui, quand le dispositif d'accrochage (20) est monté sur la tige, définit un point à une distance maximale (D) d'un axe longitudinal de la tige (10) et se trouve à une distance prédéterminée (d) de la surface de butée (16), le ressort (34) ayant un rayon interne (R) inférieur à ladite distance maximale (D) et étant constitué à partir d'un fil sensiblement cylindrique dont le rayon (r) est inférieur à ladite distance prédéterminée (d).

2/ Dispositif selon la revendication 1 caractérisé en ce que l'élément d'accrochage (20) comprend une seconde surface inclinée (26) formant un dièdre (28) avec la première surface (24), le dièdre (28) formant ledit sommet (28).

3/ Dispositif selon la revendication 1 ou 2, caractérisé en ce que l'élément d'accrochage (20) est sensiblement en forme de coupelle, la première et la seconde surfaces (24, 26) étant sensiblement annulaires.

4/ Dispositif selon l'une des revendications 1 à 3, caractérisé en ce que l'élément d'accrochage (20) comporte au moins une fente (32) longitudinale.

5/ Dispositif selon l'une des revendications 1 à 4 caractérisé en ce que l'extrémité de la tige (10) opposée à la surface de butée (16) comporte une surface biseautée (36).

## Patentansprüche

1. Einhängvorrichtung für die konzentrische Anbringung einer schraubenförmigen Feder (34) auf einer Stange (10), welche eine quergerichtete Anschlagfläche (16) sowie eine sich in der Nähe der quergerichteten Anschlagfläche (16) befindende Umfangsnut (18) umfaßt, wobei die Einhängvorrichtung ein Einhängelement (20) aus einem elastischen Material umfaßt, dazu geeignet, auf der Stange angebracht zu werden, sowie einen Teil (22) umfaßt, der dazu bestimmt ist, in der Nut (18) aufgenommen zu werden, sowie eine Spitze (28) bildende Schrägfläche (24) umfaßt, welche – wenn die Einhängvorrichtung (20) auf der Stange angebracht wird – einen Punkt auf einem maximalen Abstand (D) einer Längsachse der Stange (10) bestimmt und sich in einem vorbestimmten Abstand (d) von der Anschlagfläche (16) befindet, wobei die Feder (34) einen Innenradius (R) aufweist, der kleiner als dieser maximale Abstand (D) und ausgehend von einem im wesentlichen zylindrischen Draht gebildet ist, dessen Radius (r) kleiner als dieser vorbestimmte Abstand (d) ist.

2. Vorrichtung nach Anspruch 1, dadurch gekennzeichnet, daß das Einhängelement (20) eine zweite Schrägfläche (26) umfaßt, die mit der ersten Fläche (24) ein Zweiflach (28) bildet, wobei das Zweiflach (28) die Spitze (28) bildet.

3. Vorrichtung nach Anspruch 1 oder 2, dadurch gekennzeichnet, daß das Einhängelement (20) im wesentlichen schalenförmig ist, wobei die erste Fläche (24) sowie die zweite Fläche (26) im wesentlichen ringförmig sind.

4. Vorrichtung nach einem der Ansprüche 1 bis 3, dadurch gekennzeichnet, daß das Einhängelement (20) wenigstens einen Längsschlitz (32) aufweist.

5. Vorrichtung nach einem der Ansprüche 1 bis 4, dadurch gekennzeichnet, daß das von der Anschlagfläche (16) abgewandte Ende der Stange (10) eine Abschrägungsfläche (36) umfaßt.

## Claims

1. Securing device for concentrically mounting a helical spring (34) on a rod (10) having a transverse abutment surface (16) and a circumferential groove (18) in the vicinity of the transverse abutment surface (16), the securing device comprising a securing element (20) made of resilient material and capable of being mounted on the rod and comprising a part (22) intended to be received in the groove (18) and an inclined surface (24) forming an apex (28) which, when the securing device (20) is mounted on the rod, defines a point at a maximum distance (D) from a longitudinal axis of the rod (10) and is located at a predetermined distance (d) from the abutment surface (16), the spring (34) having an internal radius (R) less than said maximum distance (D) and being formed from a substantially cylindrical wire, the radius (r) of which is less then the said predetermined distance (d).

2. Device according to Claim 1, characterized in that the securing element (20) comprises a second inclined surface (26) forming a dihedral (28) with the first surface (24), the dihedral (28) forming the said apex (28).

3. Device according to Claim 1 or 2, characterized in that the securing element (20) is substantially cup-shaped, the first and the second surfaces (24, 26) being substantially annular.

4. Device according to any of Claims 1 to 3, characterized in that the securing element (20) has at least one longitudinal slot (32).

5. Device according to any of Claims 1 to 4, characterized in that end of the rod (10) opposite the abutment surface (16) has a chamfered surface (36).